# EUROPEAN PATENT SPECIFICATION

(11) **EP 4 083 444 B1**
(45) Date of publication and mention of the grant of the patent: **13.11.2024**
(21) Application number: 22170169.1
(22) Date of filing: 27.04.2022
(51) Int. Cl.: F15B 11/16, B62D 5/07, A01B 63/10

(54) **HYDRAULIC CIRCUIT FOR AN AGRICULTURAL VEHICLE PROVIDED WITH AN ANTI-SATURATION SYSTEM AND ANTI-SATURATION CONTROL METHOD**
HYDRAULIKKREIS FÜR EIN LANDWIRTSCHAFTLICHES FAHRZEUG MIT EINEM SÄTTIGUNGSSCHUTZSYSTEM UND VERFAHREN ZUR STEUERUNG DES SÄTTIGUNGSSCHUTZES
CIRCUIT HYDRAULIQUE POUR UN VÉHICULE AGRICOLE POURVU D'UN SYSTÈME ANTI-SATURATION ET PROCÉDÉ DE COMMANDE ANTI-SATURATION

(30) Priority: 27.04.2021 IT 202100010601
(43) Date of publication of application: 02.11.2022
(73) Proprietor: CNH Industrial Italia S.p.A., 10156 Torino (IT)
(72) Inventor: Crea, Domenico, 41123 Modena (IT); Mantovani, Michele, 46026 Quistello (IT); Tagliazucchi, Alessandro, 41018 San Cesario Sul Panaro (IT)
(74) Representative: CNH Industrial IP Department

(56) References cited:
- EP-A1- 2 554 853
- DE-A1- 3 319 533

## Description

### TECHNICAL FIELD

The present invention concerns a hydraulic circuit, in particular a hydraulic circuit for an agricultural vehicle provided with an anti-saturation system.

The present invention finds its preferred, although not exclusive, application in agricultural vehicle such as tractors.

### BACKGROUND OF THE INVENTION

Agricultural vehicles, such as tractors, comprises different hydraulic circuits that are fed by a pump that is usually carried by the internal combustion engine.

As per se known there are some essential operational systems of the vehicle that needs to be fed by the hydraulic pump such as transmission, steering or braking and that are fed by a primary feeding line as shown in EP2554853A1.

Conversely, other operational systems of the vehicle, i.e. auxiliary valves, are fed by a secondary line that is not prioritized with respect to the essential operational systems if feeding flow is not sufficient for allowing the control of the essential operational systems.

Such operation is achieved by anti-saturation systems that are based on open loop logics configured to either partition the flow into the other operational systems if the demand is higher than flow available on the secondary line, or to shut off these latter if the prioritized valve demand is higher than flow available on the secondary line

However, if no auxiliary valves are installed on the vehicle, no anti-saturation logic is performed at all. Furthermore, other operational systems of the vehicle hydraulic condition are not taken into account even if the auxiliary valves are present on the vehicle.

Therefore, it is possible that the system would not provide sufficient oil to such operational systems different with respect to auxiliary valves because there is not a dedicated control.

In view of the above, the need is felt to provide hydraulic circuit provided with anti-saturation systems that are versatile and efficient.

An aim of the present invention is to satisfy the above mentioned needs in a cost effective and optimized way.

### SUMMARY OF THE INVENTION

The aforementioned aim is reached by a hydraulic circuit and related control method as claimed in the appended set of claims.

### BRIEF DESCRIPTION OF DRAWINGS

For a better understanding of the present invention, a preferred embodiment is described in the following, by way of a non-limiting example, with reference to the attached drawings wherein:
- Figure 1 is a schematic representation of a hydraulic system of an agricultural vehicle;
- Figure 2 is a schematic representation of the hydraulic system of figure 1 with greater details; and

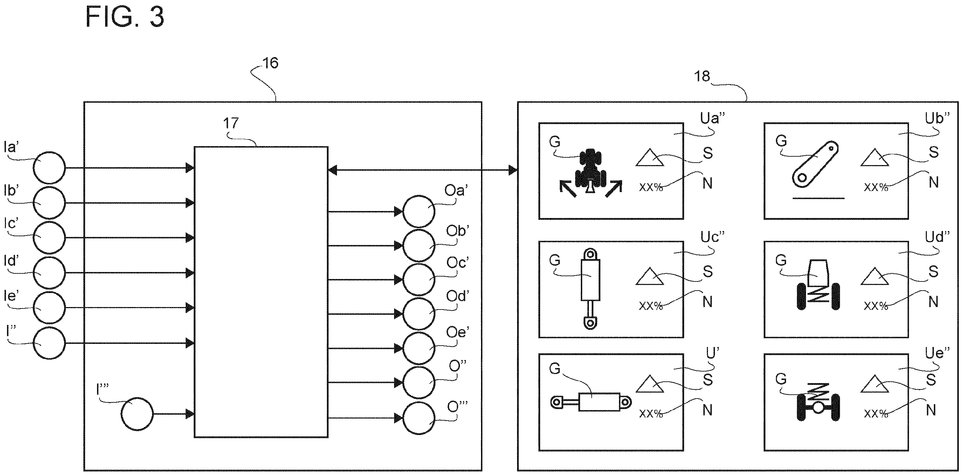

- Figure 3 is a schematic representation of an electronic control system for the hydraulic system of the invention.

### DETAILED DESCRIPTION OF THE INVENTION

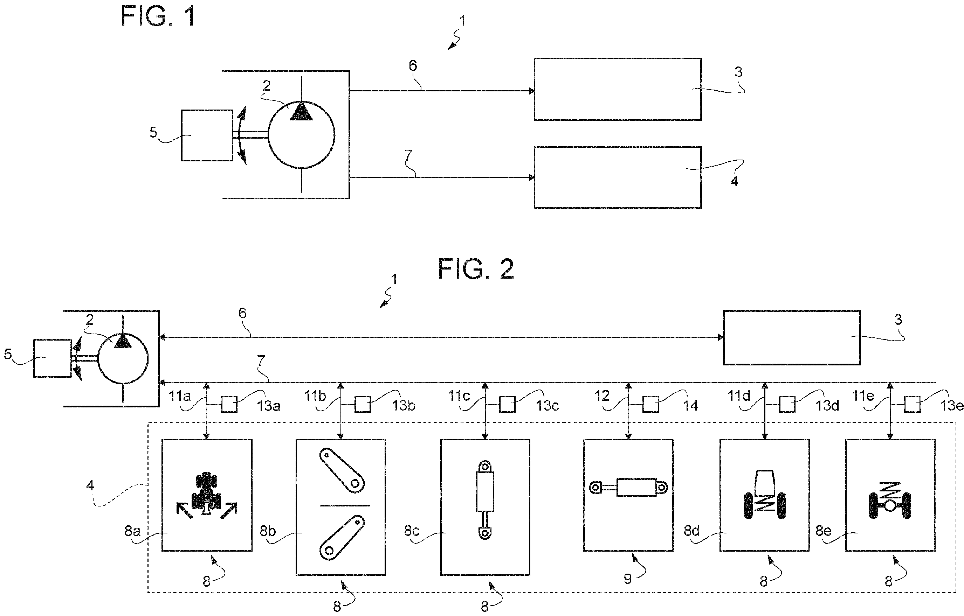

Figure 1 discloses a hydraulic circuit 1 for an agricultural vehicle (not shown) comprising pumping means 2 configured to provide a flow of oil at high pressure to fed essential operative systems hydraulic circuits 3 and other operative systems hydraulic circuits 4 of the vehicle.

In particular, the pumping means 2 may be carried in rotation to provide the oil flow by a torque source 5 such as the internal combustion engine of the vehicle or an electric motor.

The pumping means 2 are fluidly connected by a primary line conduit 6 to the essential operative system hydraulic circuits 3 and by a secondary line conduit 7 to the other operative systems hydraulic circuits 4.

The essential operative system hydraulic circuits 3 comprises the transmission hydraulic circuit, the steering hydraulic circuit and the braking hydraulic circuit.

Making reference to figure 2, the other operative systems hydraulic circuits 4 comprises at least two operative circuits 8 and auxiliary valves hydraulic circuit 9.

According to an advantageous configuration, at least two operative circuits 8 may be chosen among the following:
- A stabilizer system circuit 8a fluidly connected to secondary line 7 via a conduit 11a;
- A hitch system circuit 8b fluidly connected to secondary line 7 via a conduit 11b;
- A hydraulic link system circuit 8c fluidly connected to secondary line 7 via a conduit 11c;
- A cabin suspension system circuit 8d fluidly connected to secondary line 7 via a conduit 11d; and/or
- A front suspension system circuit 8e fluidly connected to secondary line 7 via a conduit 11e.

In particular, it is schematized a singular auxiliary valve in figure 2, connected to a respective conduit 12 to the secondary line 7, but it is clear that the auxiliary valves hydraulic circuit 9 comprises different systems controlled by respective valves, e.g. EHR (Electric hydraulic remote) valves.

Furthermore, figure 2 discloses a vehicle provided with all the operative system circuits 8a-8e listed above. Clearly some of this latter may be absent or other systems may be present in addition to auxiliary valves 9.

The hydraulic circuit 1 comprises sensor means 13a, 13b, 13c, 13d, 13e, 14 fluidly interposed on conduits 11a, 11b, 11d, 11d, 11e and 12 and configured to detect oil physical characteristic of the oil flow flowing in the respective aforementioned conduits.

In particular, the sensor means 13a, 13b, 13c, 13d, 13e, 14 may be configured to detect the flow rate, e.g. via a flow meter, of the pressure of the oil, e.g. via a pressure sensor, flowing in the respective conduit 11a-11d, 12.

The hydraulic system further comprise an electronic control unit 16 configured to be electrically connected to torque source 5 and sensor means 13a, 13b, 13c, 13d, 13e, 14 and comprising elaboration means 17 configured to control the operation of the operative system hydraulic circuits 4 consequently, on the base of the data retrieved of the aforementioned sensor means and execute at least one between the actions i) provide a warning signal and ii) control said torque source (5) .. In particular, such electronic control unit 16 may be the ECU of the vehicle.

The electronic control unit 16 is therefore configured to receive as input the following data signals:
- Ia' to Ie' retrieved by sensor means 13a- 13e on each of the respective operative system circuit 8a-8e, that relates to the oil flow/pressure flowing in conduit 11a-11e;
- I'', retrieved by sensor means 14 on valves conduit 12, that relates to the oil flow/pressure flowing in conduit 12; and
- I‴, coming from torque source 5 and relating to the power rate provided by this latter to pump 2, i.e. related to the oil flow available in secondary line 7.

The elaboration means 17 are configured to memorize a saturation logic, detailed below, configured to provide as output the following control signals in function of the above input signals:
- Oa' to Oe', configured to manage oil demand in operative system circuits 8a-8e;
- O", configured to manage oil demand in circuit 9;and
- O‴, configured to execute at least one between the actions i) provide a warning signal and ii) control torque source 5.

The saturation logic may provide the following controls:
- If the oil requested by circuits 8a-8e and 9 exceeds the flow available, execute at least one between the actions i) provide a warning signal and ii) control torque source 5; and;
- divide the fluid between the circuits 8a-8e and 9 proportionally to their flow demand.

The electronic unit 16 is furthermore electronically connected to user control means 18 configured to allow to the user to vary the priority of the oil to be provided to the circuits 8a-8e and 9.

Preferably, user control means 18 may comprise a display configured to provide a first touch area U' configured to select the auxiliary valve circuit 9 and second touch areas U" configured to select the aforementioned at least two operative system circuits 8a-8e.

More preferably, each touch area U', Ua"-Ue" comprises three sections:
- A graphical section G wherein it is indicated, either by a symbolic or by word, the operative system that may be controlled by acting on such specific touch area;
- A selector section S wherein it is possible to select the related operative system so that fluid may flow into this system circuit; and
- A numerical section N wherein it is possible to input a value of flow, preferably as percentage of the available flow in secondary line 7, to this system circuit.

Accordingly, the user may select at least one between auxiliary valve circuit 9 and other present operative system circuits 8a-8e, by touching the respective touch area U', Ua"-Ue" to allow the partition of the available fluid to only one or among different circuits, eventually with different value of partition of the oil flow.

Furthermore, the display means may be further configured to show, e.g. via sections S and N listed above, output data Oa'-Oe', O", O‴, i.e. data related to the oil flow flowing to the operative system circuits 4.

The warning signal may be displayed via user control means 17, and/or via acoustic or lighting means to suggest the user to increase the speed/torque of torque source.

The warning signal may be present in substitution of the automatic control of the torque source or in combination with this latter, e.g. the automatic control may be set after a preset time interval after the warning signal is provided to the driver.

The operation of the above described hydraulic circuit provided with an ant saturation system is the following.

The user controls the vehicle to allow its travel and, in case, the use of certain operational elements 8a-8e or other systems controlled by the auxiliary valves 9.

Accordingly, the oil flow provided by pump 2 flows via primary conduit 6 towards the steering, transmission and brakes circuits of the vehicle. The remaining flow is sent via secondary conduit 7 to circuits 8a-8e and 9 according to the control provided by the electronic control unit 16, as described above.

If the user presses, via display means, only one between the operative systems 8a-8b or auxiliary valves 9 of further selected the relative quantity of oil that should flow through this system, the electronic control unit 16 prioritizes the flow towards the selected systems.

In view of the above, the present invention also relates to a control method for partitioning the oil flow between different operative systems hydraulic circuits 4 of a secondary line 7 of a vehicle comprising the following steps:
i) Acquiring data related to the oil flow flowing in different operative systems 8a-8e, 9 of the operative systems hydraulic circuits 4;
ii) Elaborating such data to compare the detected flow with respect to the available flow coming from pump means 2;
iii) If such detected flow is greater with respect to the available flow, execute at least one between the actions i) provide a warning signal and ii) control torque source 5 to increase the flow at secondary line 7;
iv) divide the possible flow among the different operative systems hydraulic circuits 4 in function of their flow demand.

The flow division among the different operative systems hydraulic circuits 4 may be realized proportionally to the demand of the different operative systems 8a-8e, 9.

The above-described method may further comprise the following step:
v) Acquire input data related to user's request to provide flow to at least one among the operative systems hydraulic circuits 8a-8e, 9;
vi) Prioritize the flow coming to the secondary line to the selected at least one operative systems hydraulic circuits.

The method may further comprise a further step before step vi) listed above:
v') Acquire input data related to user's request to specify a relative quantity of flow to at least one among the operative systems hydraulic circuits 8a-8e, 9;

In particular, the acquisition of input data may be executed thanks to display means configured to define touch area that can be pressed by the user to provide the input data. Such display means are furthermore advantageously configured to allow insertion or selection of a number, e.g. a percentage, of flow that may should flow towards the selected operative system 8a-8e, 9.

The warning signal may be displayed via the aforementioned display means and/or may be an acoustic signal and/or a lighting signal.

In view of the foregoing, the advantages of a hydraulic circuit and related control method according to the invention are apparent.

Thanks to the proposed system and control method, it is possible to provide an improved anti saturation logic.

In particular, it is possible to involve other systems than the auxiliary valves to control the distribution of the available oil flow.

According to the above, the comfort of the operation of the vehicle is increase; indeed the user may select the behaviors of the anti saturation logic according to the specific work needed.

Furthermore, the warning signal allows the user to increase the speed/torque provided by torque source. In this way, it may be provided enough fluid to all primary and secondary line systems without the need of dividing this latter, at least within the torque source capabilities.

If configured, the control unit will automatically increase the speed/torque provided by torque source thereby automatically providing the needed flow via pump carried by the torque source.

It is clear that modifications can be made to the described hydraulic circuit and related control method which do not extend beyond the scope of protection defined by the claims.

For example, as said, more auxiliary valves may be present or a different operative system with respect to the hitch circuit. E.g., the user control means 18 may comprise other elements such as buttons instead or the described display.

Furthermore, the control law described above may be different.

## Claims

1. - Hydraulic circuit (1) for an agricultural vehicle comprising a pump (2) carried by a torque source (5) to provide oil to a primary conduit (6) and to a secondary conduit (7),
said primary conduit (6) being configured to be fluidly connected to essential operative system hydraulic circuits (3) of said vehicle and said secondary conduit (7) being configured to be fluidly connected to other operative systems hydraulic circuits (4) of said vehicle,
said other operative systems hydraulic circuits (4) comprising at least two among a stabilizer system circuit (8a), a hitch system circuit (8b), a hydraulic link system circuit (8c), a cabin suspension system circuit (8d) and a front suspension system circuit (8e),each among said circuits (8a-8e) respectively being connected by conduits (11a-11e, 12) to said secondary conduit (7),
wherein said hydraulic circuit (1) comprises sensor means (13a-13e, 14) configured to be interposed on said conduits (11a-11e, 12) and configured to detect oil characteristics of the oil flow flowing into said conduits (11a-11e, 12),
and said hydraulic circuit (1) being provided by an electronic control unit (16) electrically connected to said sensor means (13a-13e, 14) and to said torque source (5) and comprising elaboration means (17) configured to acquire the data detected by said sensor means (13a-13e, 14) and, in function of said acquired data, to control the oil flow demand of said other operative systems hydraulic circuits (4) and execute at least one between the actions i) provide a warning signal and ii) control said torque source (5),
the hydraulic circuit is **characterized in that** said electronic control unit (16) is electrically connected to user control means (18) configured to allow the user to control the oil flow priority among said hydraulic circuits (8a-8e, 9).

2. - Hydraulic circuit according to claim 1, wherein said sensor means (13a-13e, 14) comprises a pressure sensors or a flowmeter sensor.

3. - Hydraulic circuit according to claim 1, wherein said user control means (18) comprises display means configured to provide a plurality of touch areas (Ua'- Ue', U") each configured to provide a control among said hydraulic circuits (8a-8e, 9).

4. - Hydraulic circuit according to any of the preceding claims, wherein said elaboration means (17) are configured to receive input data (Ia'- Ie', I'') from said sensor means (13a-13e, 14) and input data (I''') from said torque source (5), said elaboration means (17) providing control outputs (Oa'-Oe' O") for varying the flow demand of said other operative systems hydraulic circuits (4) and/or control outputs (O‴) for executing at least one between the actions i) provide a warning signal and ii) control said torque source (5), in function of said input data (Ia'-Ie', I", I‴).

5. - Hydraulic circuit according to claims 3 or 4, wherein said elaboration means (17) are configured to electrically connected to user control means (18) to receive user input data, said user input data being elaborated by said elaboration means (17) together with said input data (Ia'-Ie', I", I‴) to provide said output data (Oa'-Oe', O", O‴ ) .

6. - Hydraulic circuit according to claim 5, wherein said user control means (18) are configured to display to said user some information related to said output data (Oa'-Oe', O", O‴ ).

7. - Hydraulic circuit according to any of the preceding claims, wherein said essential operative system circuits (3) comprises a steering, a braking and a transmission hydraulic circuit of said agricultural vehicle.

8. - Control method to an oil flow partition between different operative systems hydraulic circuits (4) of a secondary line (7) of a hydraulic circuit according to any of the preceding claims, said control method comprising the following steps:
i) Acquiring data related to the oil flow flowing in different operative systems 8a-8e, 9 of the operative systems hydraulic circuits 4;
ii) Elaborating such data to compare the detected flow with respect to the available flow coming from pump means 2;
iii) If such detected flow is greater with respect to the available flow, executing at least one between the actions i) provide a warning signal and ii) control said torque source (5).;
iv) divide the possible flow among the different operative systems hydraulic circuits 4 in function of their flow demand.

9. Method according to claim 8, further comprising the following steps:
v) Acquire input data related to an user's request to provide flow to at least one among the operative systems hydraulic circuits 8a-8e, 9;
vi) Prioritize the flow coming to the secondary line to the selected at least one operative systems hydraulic circuits.

10. Method according to claim 9, further comprising the following step between steps v) and vi).
v') Acquire input data related to user's request to specify a relative quantity of flow to at least one among the operative systems hydraulic circuits 8a-8e, 9.

## Patentansprüche

1. Hydraulikkreislauf (1) für ein landwirtschaftliches Fahrzeug mit einer Pumpe (2), die von einer Drehmomentquelle (5) getragen wird, um eine primäre Leitung (6) und eine sekundäre Leitung (7) mit Öl zu versorgen,
wobei die primäre Leitung (6) dazu eingerichtet ist, an wesentliche operative Systemhydraulikkreisläufe (3) des Fahrzeugs fluidtechnisch angeschlossen zu wer-den, und wobei die sekundäre Leitung (7) dazu eingerichtet ist, an andere operative Systemhydraulikkreisläufe (4) des Fahrzeugs fluidtechnisch angeschlossen zu werden,
wobei die anderen operativen Systemhydraulikkreisläufe (4) mindestens zwei aus einem Stabilisatorsystemkreislauf (8a), einem Kupplungssystemkreislauf (8b), einem Hydraulikverbindungssystemkreislauf (8c), einem Kabinenfederungssystemkreislauf (8d) und einem vorderen Federungssystemkreislauf (8e) umfassen, wobei jeder der Kreisläufe (8a-8e) jeweils mittels Leitungen (11a-11e, 12) mit der sekundären Leitung (7) verbunden ist,
wobei der Hydraulikkreislauf (1) Sensoreinrichtungen (13a-13e, 14) umfasst, die dazu eingerichtet sind, zwischen den Leitungen (11a-11e, 12) angeordnet zu werden und dazu eingerichtet sind, Öleigenschaften des Ölflusses zu erfassen, der in die Leitungen (11a-11e, 12) fließt,
und wobei der Hydraulikkreislauf (1) von einer elektronischen Steuereinrichtung (16) bereitgestellt ist, die mit den Sensoreinrichtungen (13a-13e, 14) und der Drehmomentquelle (5) elektrisch verbunden ist und Verarbeitungsmittel (17) aufweist, die dazu eingerichtet sind, die Daten aufzunehmen, die von den Sensoreinrichtungen (13a-13e, 14) erfasst werden und in Abhängigkeit von den aufgenommenen Daten den Ölflussbedarf der anderen operativen Systemhydraulikkreisläufe (4) zu steuern und mindestens einen der Vorgänge aus i) Bereitstellen eines Warnsignals und ii) Steuern der Drehmomentquelle (5) auszuführen,
wobei der Hydraulikkreislauf **dadurch gekennzeichnet ist, dass** die elektronische Steuereinrichtung (16) mit Bedienersteuerungsmitteln (18) elektrisch verbunden ist, die dazu eingerichtet sind, dem Bediener das Steuern der Priorität des Ölflusses zwischen den Hydraulikkreisläufen (8a-8e, 9) zu ermöglichen.

2. Hydraulikkreislauf nach Anspruch 1, wobei die Sensoreinrichtungen (13a-13e, 14) einen Drucksensor oder einen Durchflusssensor umfassen.

3. Hydraulikkreislauf nach Anspruch 1, wobei die Bedienersteuerungsmittel (18) eine Anzeigeeinrichtung umfassen, die dazu eingerichtet ist, eine Mehrzahl von Berührungsbereichen (Ua'-Ue', U") bereitzustellen, die jeweils dazu eingerichtet sind, eine Steuerung zwischen den Hydraulikkreisläufen (8a-8e, 9) bereitzustellen.

4. Hydraulikkreislauf nach einem der vorhergehenden Ansprüche, wobei die Verarbeitungsmittel (17) dazu eingerichtet sind, Eingangsdaten (la'-le', I") von den Sensoreinrichtungen (13a-13e, 14) und Eingangsdaten (I‴) von der Drehmomentquelle (5) aufzunehmen, wobei die Verarbeitungsmittel (17) Steuerungsausgaben (Oa'-Oe', O") zum Variieren des Flussbedarfs der anderen operativen Systemhydraulikkreisläufe (4) und/oder Steuerungsausgänge (O‴) zum Ausführen mindestens eines der Vorgänge aus i) Bereitstellen eines Warnsignals und ii) Steuern der Drehmomentquelle (5) in Abhängigkeit von den Eingangsdaten (la'-le', I", I‴) bereitstellen.

5. Hydraulikkreislauf nach Anspruch 3 oder 4, wobei die Verarbeitungsmittel (17) dazu eingerichtet sind, mit den Bedienersteuerungsmitteln (18) elektrisch verbunden zu werden, um Bedienereingangsdaten zu empfangen, wobei die Bedienereingangsdaten von den Verarbeitungsmitteln (17) zusammen mit den Eingangsdaten (la'-le', I", I‴) verarbeitet werden, um die Ausgangsdaten (Oa'-Oe', O", O‴) bereitzustellen.

6. Hydraulikkreislauf nach Anspruch 5, wobei die Bedienersteuerungsmittel (18) dazu eingerichtet sind, dem Bediener einige Informationen anzuzeigen, die mit den Ausgangsdaten (Oa'-Oe', O", O‴) verknüpft sind.

7. Hydraulikkreislauf nach einem der vorhergehenden Ansprüche, wobei die wesentlichen operativen Systemhydraulikkreisläufe (3) einen Lenk-, einen Brems- und einen Getriebehydraulikkreislauf des landwirtschaftlichen Fahrzeugs umfassen.

8. Verfahren zur Steuerung einer Ölflussaufteilung zwischen verschiedenen operativen Systemhydraulikkreisläufen (4) einer sekundären Leitung (7) eines Hydraulikkreislaufs nach einem der vorhergehenden Ansprüche, wobei das Steuerungsverfahren die folgenden Schritte umfasst:
i) Erfassen von Daten, die mit dem Ölfluss verknüpft sind, der in verschiedenen operativen Systemen (8a-8e, 9) der operativen Systemhydraulikkreisläufe (4) fließt;
ii) Verarbeiten solcher Daten, um den ermittelten Fluss mit dem verfügbaren Fluss zu vergleichen, der aus Pumpeinrichtungen (2) kommt;
iii) Ausführen zumindest eines aus den Vorgängen i) Bereitstellen eines Warnsignals und ii) Steuern der Drehmomentquelle (5), falls dieser erfasste Fluss größer ist als der verfügbare Fluss;
iv) Aufteilen des möglichen Flusses zwischen den verschiedenen operativen Systemhydraulikkreisläufen (4) in Abhängigkeit von ihrem Flussbedarf.

9. Verfahren nach Anspruch 8, des Weiteren die folgenden Schritte umfassend:
v) Erfassen von Eingangsdaten, die mit einer Bedieneranfrage verknüpft sind, um Fluss an mindestens einen der operativen Systemhydraulikkreisläufe (8a-8e, 9) bereitzustellen;
vi) Priorisieren des Flusses, der zu der sekundären Leitung kommt, zu dem ausgewählten zumindest einen operativen Systemhydraulikkreislauf.

10. Verfahren nach Anspruch 9, des Weiteren den folgenden Schritt zwischen den Schritten v) und vi) umfassend:
v') Erfassen von Eingangsdaten, die mit der Bedieneranfrage verknüpft sind, eine relative Flussmenge zu mindestens einem der operativen Systemhydraulikkreisläufe (8a-8e, 9) anzugeben.

## Revendications

1. - Circuit hydraulique (1) pour un véhicule agricole comprenant une pompe (2) alimentée par une source de couple (5) pour fournir de l'huile à un conduit principal (6) et à un conduit secondaire (7),
ledit conduit principal (6) étant configuré pour être raccordé fluidiquement à des circuits hydrauliques (3) de systèmes opérationnels essentiels dudit véhicule et ledit conduit secondaire (7) étant configuré pour être raccordé fluidiquement à d'autres circuits hydrauliques de systèmes opérationnels (4) dudit véhicule,
lesdits autres circuits hydrauliques de systèmes opérationnels (4) comprenant au moins deux parmi un circuit de système stabilisateur (8a), un circuit de système d'attelage (8b), un circuit de système de liaison hydraulique (8c), un circuit de système de suspension de cabine (8d) et un circuit de système de suspension avant (8e), chacun parmi lesdits circuits (8a-8e) étant respectivement raccordé par des conduits (11a-11e, 12) audit conduit secondaire (7),
dans lequel ledit circuit hydraulique (1) comprend des moyens de détection (13a-13e,14) configurés pour être interposés dans lesdits conduits (11a-11e, 12) et configurés pour détecter les caractéristiques d'huile du flux d'huile s'écoulant dans lesdits conduits (11a-11e, 12),
et ledit circuit hydraulique (1) étant fourni par une unité de commande électronique (16) raccordée électriquement auxdits moyens de détection (13a-13e, 14) et à ladite source de couple (5) et comprenant des moyens d'élaboration (17) configurés pour acquérir les données détectées par lesdits moyens de détection (13a-13e, 14) et, en fonction desdites données acquises, de contrôler la demande de flux d'huile desdits autres circuits hydrauliques des systèmes opérationnels (4) et d'exécuter au moins l'une des actions parmi i) fournir un signal d'avertissement et ii) contrôler ladite source de couple (5),
le circuit hydraulique est **caractérisé en ce que** ladite unité de commande électronique (16) est raccordée électriquement à des moyens de commande utilisateur (18) configurés pour permettre à l'utilisateur de contrôler la priorité du flux d'huile parmi lesdits circuits hydrauliques (8a-8e, 9).

2. - Circuit hydraulique selon la revendication 1, dans lequel lesdits moyens de détection (13a-13e, 14) comprennent des capteurs de pression ou un capteur de débit.

3. - Circuit hydraulique selon la revendication 1, dans lequel lesdits moyens de commande utilisateur (18) comprennent des moyens d'affichage configurés pour fournir une pluralité de zones tactiles (Ua'- Ue', U") chacune configurée pour fournir un contrôle parmi lesdits circuits hydrauliques (8a-8e, 9).

4. - Circuit hydraulique selon l'une quelconque des revendications précédentes, dans lequel lesdits moyens d'élaboration (17) sont configurés pour recevoir des données d'entrée (Ia'-Ie', I") provenant desdits moyens de détection (13a-13e, 14) et des données d'entrée (I‴) provenant de ladite source de couple (5), lesdits moyens d'élaboration (17) fournissant des sorties de commande (Oa'-Oe' O") pour faire varier la demande de flux desdits autres circuits hydrauliques de systèmes opérationnels (4) et/ou des sorties de commande (O‴) pour exécuter au moins l'une des actions parmi i) fournir un signal d'avertissement et ii) commander ladite source de couple (5), en fonction desdites données d'entrée (Ia'-Ie', I", I‴).

5. - Circuit hydraulique selon les revendications 3 ou 4, dans lequel lesdits moyens d'élaboration (17) sont configurés pour être raccordés électriquement à des moyens de commande utilisateur (18) pour recevoir des données d'entrée utilisateur, lesdites données d'entrée utilisateur étant élaborées par lesdits moyens d'élaboration (17) conjointement avec lesdites données d'entrée (Ia'-Ie', I" I‴) pour fournir lesdites données de sortie (Oa'-Oe', O", O‴).

6. - Circuit hydraulique selon la revendication 5, dans lequel lesdits moyens de commande utilisateur (18) sont configurés pour afficher audit utilisateur certaines informations liées auxdites données de sortie (Oa'-Oe', O", O‴).

7. - Circuit hydraulique selon l'une quelconque des revendications précédentes, dans lequel lesdits circuits du système opérationnel essentiel (3) comprennent un circuit hydraulique de direction, de freinage et de transmission dudit véhicule agricole.

8. - Procédé de commande d'une répartition de flux d'huile entre différents circuits hydrauliques de systèmes opérationnels (4) d'une ligne secondaire (7) d'un circuit hydraulique selon l'une quelconque des revendications précédentes, ledit procédé de commande comprenant les étapes suivantes :
i) acquisition de données relatives au flux d'huile circulant dans les différents systèmes opérationnels 8a-8e, 9 des circuits hydrauliques de systèmes opérationnels 4 ;
ii) élaboration de telles données pour comparer le débit détecté par rapport au débit disponible provenant des moyens de pompage 2 ;
iii) si un tel débit détecté est supérieur au débit disponible, exécuter au moins l'une des actions parmi i) fournir un signal d'avertissement et ii) contrôler ladite source de couple (5) ;
iv) répartition du débit possible entre les différents circuits hydrauliques de systèmes opérationnels 4 en fonction de leur demande de débit.

9. - Procédé selon la revendication 8 comprenant en outre les étapes suivantes :
v) acquérir des données d'entrée liées à une demande d'un utilisateur visant à fournir un débit à au moins un parmi les circuits hydrauliques de systèmes opérationnels 8a-8e, 9 ;
vi) prioriser le débit arrivant à la ligne secondaire vers l'au moins un circuit hydraulique de systèmes opérationnels sélectionné.

10. - Procédé selon la revendication 9 comprenant en outre l'étape suivante parmi les étapes v) et vi) :
v') acquérir des données d'entrée liées à la demande d'un utilisateur visant à spécifier une quantité relative de débit vers au moins un parmi les circuits hydrauliques de systèmes opérationnels 8a-8e, 9.
